# EUROPEAN PATENT APPLICATION

(11) **EP 2 833 579 A1**
(43) Date of publication of application: **04.02.2015**
(21) Application number: 13767427.1
(22) Date of filing: 26.03.2013
(51) Int. Cl.: H04L 12/70

(54) **CONTROL DEVICE, PHYSICAL NODE, TERMINAL DEVICE, COMMUNICATION SYSTEM, PORT STATE DISPLAY METHOD, AND PROGRAM**

(30) Priority: 27.03.2012 JP 2012071193
(71) Applicant: NEC Corporation, Tokyo 108-8001 (JP)
(72) Inventor: TAI, Hideyuki, Tokyo 108-8001 (JP)
(74) Representative: Reeve, Nicholas Edward
(86) International application number: PCT/JP2013/058884
(87) International publication number: WO 2013/146829

(57) **Abstract**

According to the present invention, work of maintenance of a physical node constituting a virtual network, a cable connection error, and so forth are reduced. A control apparatus includes a virtual network management unit configured to manage the virtual network using mapping information that associates configuration information on a physical network and configuration information on the virtual network and a control unit configured to set control information in the physical node on the physical network, based on the mapping information, thereby causing the physical node to operate as a virtual node on the virtual network. The control apparatus is configured to determine an assignment status of a port of the physical node with respect to the virtual network, based on the mapping information. Then, the control apparatus causes a predetermined port status display apparatus to display the assignment status of the port with respect to the virtual network.

## Description

### [Technical Field]

### (CROSS-REFERENCE TO RELATED APPLICATIONS)

The present invention is based upon and claims the benefit of the priority of Japanese Patent Application No. 2012-071193 (filed on March 27, 2012), the disclosure of which is incorporated herein in its entirety by reference.

The present invention relates to a control apparatus, a physical node, a terminal apparatus, a communication system, a port status display method, and a program. More specifically, the invention relates to a control apparatus, a physical node, a terminal apparatus, a communication system, a port status display method, and a program of the communication system configured to provide a virtual network.

### [Background]

Virtualization of a network is to logically divide one physical network into a plurality of networks. By virtualizing the network and sharing a network resource with a different user, cost reduction can be expected.

In recent years, a demand for such a virtual network is increased. As the virtual network, there is provided a VLAN (Virtual Local Area Network) of a conventional type. Alternatively, the virtual network may also be constructed, using an overlay network based on IP in IP tunneling (RFC1853) or the like. Non Patent Literature 1, for example, discloses a research project on a world-wide overlay network, for example. Non Patent Literature 1 describes that a virtual node can be created on the overlay network by the technology described in Non Patent Literature 1, and that the overlay network with the virtual node created thereon can be provided to a plurality of researchers.

In recent years, a network referred to as OpenFlow is drawing attention (refer to Non Patent Literature 2 and 3). The OpenFlow adopts a network architecture of a centralized control type in which a control apparatus referred to as an OpenFlow controller controls the behavior of a switch referred to as an OpenFlow switch. According to the OpenFlow, the behavior of the switch constituting a virtual network can be flexibly changed according to the status of the network as a whole. For this reason, use of the OpenFlow facilitates construction of the virtual network with a high flexibility.

Patent Literature 1 discloses a virtual network management server configured to automatically generate a VLAN assignment of a virtual communication path between a gateway and a base station without using a control protocol for collecting link information, on a transmission network of a cellular phone service network where the virtual communication path is formed, using a VLAN. According to Patent Literature 1, this virtual network management server includes ring configuration node information configured to manage a configuration node for each ring and ring connection I/F information configured to manage a ring connection I/F for each configuration node of the ring, generates VLAN setting information, and updates switch VLAN setting. The virtual network management server generates the VLAN setting information to forward a frame to be transmitted or received using a specified gateway connection port and a base station connection port over a specified VLAN, and to transmit or receive a frame with a tag of the specified VLAN via each ring connection I/F between the ring to which the gateway connection switch belongs and the ring to which the base station connection switch belongs.

Further, Patent Literature 2 discloses a network relay apparatus that allows a correct connecting destination to be visually intelligibly instructed even before cable connection.

### [CITATION LIST]

### [PATENT LITERATURE]

[PATENT LITERATURE 1]
   JP Patent Kokai Publication No. JP2011-061401A
[PATENT LITERATURE 2]
   JP Patent Kokai Publication No. JP2010-010997A

### NON-PATENT LITERATURE

[NON-PATENT LITERATURE 1]
   Brent Chun and six other authors, "PlanetLab: An Overlay Testbed for Broad-Coverage Services", [online], [Searched on February 14, Heisei 24 (2012)], Internet http://walfredo.dsc.ufcg.edu.br/cursos/2005/distsis20052/pdn-03-009.p df
[NON-PATENT LITERATURE 2]
   Nick McKeown and seven other authors, "OpenFlow: Enabling Innovation in Campus Networks", [online], [Searched on February 14, Heisei 24 (2012)], Internet <URL: http://www.openflow.org/documents/openflow-wp-latest.pdf>.
[NON-PATENT LITERATURE 3]
   "OpenFlow Switch Specification" Version 1.1.0 Implemented (Wire Protocol 0x02), [online] [Searched on February 14, Heisei 24 (2012)], Internet <URL: http://www.openflow.org/documents/openflow-spec-v1.1.0.pdf>.

### [Summary]

### [Technical Problem]

The following analysis has been given by the present invention. Let us consider an environment in which the control apparatus performs centralized control of a plurality of the switches and a plurality of the virtual networks are constructed on a physical network, as disclosed in the above-mentioned Non-Patent Literatures 2 and 3. When connection of the physical network is changed, it is necessary for an operator to refer to information on each virtual network held by the control apparatus. To take an example, let us consider a case where a certain server is connected to the virtual network managed by a user A. First, the operator refers to the information held by the control apparatus using a CLI (command line interface), a GUI (graphical user interface), or the like, and identifies the number of a physical port associated with the virtual network of the user A. Then, the operator finds the physical position of the port by using the number of the physical port, and then connects a cable to the physical position of the port. It is necessary for the operator to convert the information on the virtual network to the number of the physical port and to further convert the number of the physical port to the physical position of the port. As described above, in the environment in which the virtual networks are constructed, information conversion is performed as many times as twice. In the case of the switch having a high port mounting density in particular, it becomes more difficult to find out the physical position of a port, so that a burden on the operator increases. Further, it is also troublesome that the information held by the controller must be referred to every time when cable connection is made.

On the other hand, actually, an existent switch includes a port lamp for each port, and includes just a function of displaying information such as a port communication speed, presence or absence of establishment of a physical link, and presence or absence of occurrence of a link failure by changing a luminescent color and blinking of the port lamp.

In this regard, in the technology disclosed in Patent Literature 1, by inputting the ports of the switches within the network to connect the gateway and the base station, the VLAN setting information configured to collect information on for which port of each switch the VLAN is to be set up (refer to Fig. 11 in Patent Literature 1) is just obtained. It is necessary for the relay apparatus disclosed in Patent Literature 2 as well to store connection information indicating a relationship of connection of a cable between a connection port of the relay apparatus and a connection port of a different apparatus. Thus, it is impossible to instruct a connection destination such as the virtual network described above which requires a virtual-to-physical conversion.

An object of the invention is to provide a control apparatus, a physical node, a terminal apparatus, a communication system, a port status display method, and a program that can contribute to reduction of work of maintenance of the physical node constituting a virtual network, a cable connection error, and so forth.

### [Solution to Problem]

According to a first aspect, there is provided a control apparatus comprising: a virtual network management unit configured to manage a virtual network using mapping information that associates configuration information on a physical network and configuration information on the virtual network; a control unit configured to set control information in a physical node on the physical network, based on the mapping information, thereby causing the physical node to operate as a virtual node on the virtual network; and a port status display control unit configured to determine an assignment status of a port(s) of the physical node with respect to the virtual network, based on the mapping information and to cause a predetermined port status display apparatus to display the assignment status of the port(s) with respect to the virtual network.

According to a second aspect, there is provided a physical node comprising: a plurality of ports and a port lamp for displaying a status of each port; a packet processing unit configured to forward a packet received from each port, based on control information set by a control apparatus; and a port lamp control unit configured to perform display control of the port lamp such that an assignment status of each port with respect to a virtual network is displayed, based on an instruction from the control apparatus.

According to a third aspect, there is provided a terminal apparatus configured to request an assignment status of a port of an arbitrary physical node with respect to a virtual network to the control apparatus described above, and to display the assignment status of the port of the physical node with respect to the virtual network received from the control apparatus.

According to a fourth aspect, there is provided a communication system including the control apparatus described above and a port status display apparatus configured to display the assignment status of each port of a physical node with respect to a virtual network.

According to a fifth aspect, there is provided a port status display method to be executed by a control apparatus comprising a virtual network management unit configured to manage a virtual network using mapping information that associates configuration information on a physical network and configuration information on the virtual network and a control unit configured to set control information in a physical node on the physical network, based on the mapping information, thereby causing the physical node to operate as a virtual node on the virtual network, the port status display method comprising the steps of: determining an assignment status of a port of the physical node with respect to the virtual network, based on the mapping information; and causing a predetermined port status display apparatus to display the assignment status of the port with respect to the virtual network. This method is linked to a specific machine that is the control apparatus configured to control the physical node.

According to a sixth aspect, there is provided a program for a computer installed in a control apparatus comprising a virtual network management unit configured to manage a virtual network using mapping information that associates configuration information on a physical network and configuration information on the virtual network and a control unit configured to set control information in a physical node on the physical network, based on the mapping information, thereby causing the physical node to operate as a virtual node on the virtual network. The program causes the computer to execute the processes of: determining an assignment status of a port of the physical node with respect to the virtual network, based on the mapping information; and causing a predetermined port status display apparatus to display the assignment status of the port with respect to the virtual network. This program can also be recorded in a (non-transient) storage medium capable of being read by the computer. That is, the present invention can also be embodied as a computer product.

### [Advantageous Effects of Invention]

According to the present invention, contribution to reduction of work of maintenance of the physical node constituting the virtual network, a cable connection error, and so forth can be achieved.

### [Brief Description of Drawings]

Fig. 1 is a diagram showing a configuration of an exemplary embodiment of the present invention.
Fig. 2 is a block diagram showing a basic configuration of a communication system in a first exemplary embodiment of the present invention.
Fig. 3 is a block diagram showing a configuration of a controller and switches in the first exemplary embodiment of the present invention.
Fig. 4 is a diagram for explaining a correspondence relationship between each physical node (switch) and a virtual network.
Fig. 5 shows an example of a table (port mapping table) for managing a correspondence relationship between each physical node (switch) and a port of the physical node (switch) and a node (virtual switch) and a port of the node (virtual switch) on a virtual network.
Fig. 6 shows an example of a table (virtual network topology table) for managing topology information of the virtual network.
Fig. 7 shows an example of a table (virtual network table) for managing each node on each virtual network.
Fig. 8 shows an example of a table (port lamp display mode table) for managing a port lamp display mode of each physical node (switch).
Fig. 9 is a flowchart showing a flow of processes in the communication system in the first exemplary embodiment of the present invention.
Fig. 10 is a block diagram showing a configuration of a controller, switches, and a portable terminal in a second exemplary embodiment of the present invention.
Fig. 11 is a block diagram showing a configuration of a controller and switches in a third exemplary embodiment of the present invention.

### [Description of Embodiments]

First, an overview of an exemplary embodiment of the present invention will be described with reference to the drawings. A reference sign in each drawing appended to this overview is appended to each element for convenience, as an example for helping understanding, and does not intend to limit the present invention to the mode that has been illustrated.

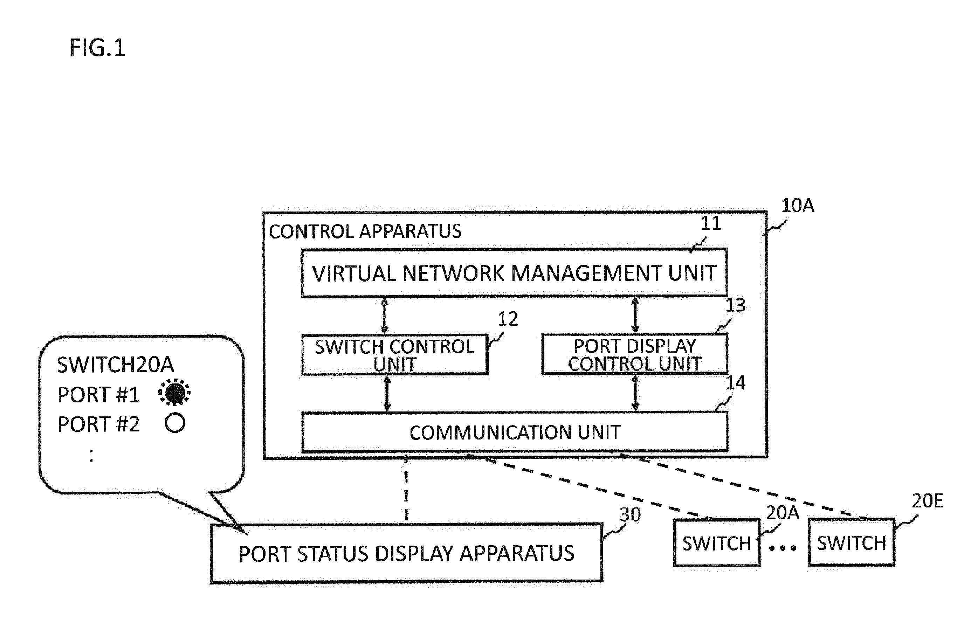

As shown in Fig. 1, the exemplary embodiment of the present invention can be implemented by a communication system including a control apparatus 10A configured to cause each of physical nodes (corresponding to switches 20A to 20E in Fig. 1) to operate as a virtual node on a virtual network and a port status display apparatus 30 configured to display a assignment status of each port with respect to the virtual network received from the control apparatus 10A.

More specifically, the control apparatus 10A includes a virtual network management unit 11, a control unit (a switch control unit 12 in Fig. 1), and a port status display control unit (a port display control unit 13 in Fig. 1). The virtual network management unit 11 is configured to manage the virtual network using mapping information that associates configuration information on a physical network formed by the physical nodes (corresponding to the switches 20A to 20E in Fig. 1) and configuration information on the virtual network. The control unit is configured to cause each of the physical nodes to operate as the virtual node on the virtual network by setting control information in each of the physical nodes on the physical network, based on the mapping information. The port status display control unit is configured to determine the assignment status of each port of the physical node with respect to the virtual network, based on the mapping information, and to cause the predetermined port status display apparatus to display the assignment status of the port of the physical node with respect to the virtual network.

The port status display control unit (port display control unit 13 in Fig. 1) determines the assignment status of each of the ports (ports #1 and #2) of the switch 20A with respect to the virtual network, based on the mapping information, for example. Then, the port status display control unit displays the assignment status of each of the ports (ports #1 and #2) of the switch 20A (for instance, the port #1 (with a red lamp thereof blinking)... is associated with a virtual port, and the port #2 (with no lamp thereof blinking)... is not associated with a virtual port). In this case, preferably, the display is performed in such a manner that disposition of each physical port of the switch 20A as well as the port assignment of each of the ports (ports #1 and #2) of the switch 20A is known.

With the above-mentioned arrangement, a checking operation when connecting the switch 20B to the virtual network is reduced and erroneous connection is suppressed.

### [First Exemplary Embodiment]

Next, a first exemplary embodiment of the present invention using a port lamp of each switch as an above-mentioned port status display apparatus will be described in detail with reference to the drawings. In this exemplary embodiment, presence or absence of association (assignment status) of each physical node with respect to a virtual port is informed to an operator, using a change in a color of the port lamp.

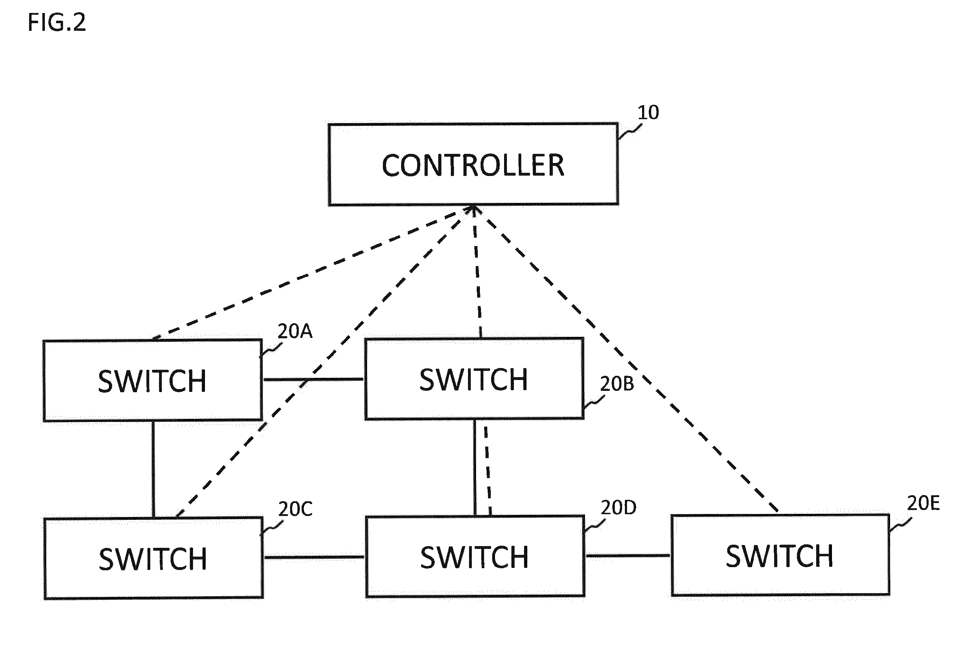

Fig. 2 is a block diagram showing a basic configuration of a communication system in the first exemplary embodiment of the present invention. Referring to Fig. 2, the configuration including switches 20A to 20E and a controller 10 configured to control these switches 20A to 20E is shown.

The controller 10 is connected to the switches 20A to 20E via control lines (secure channels) shown by dotted lines in Fig. 2. Transfer of a control message between the controller 10 and each of the switches 20A to 20E can be performed, using an OpenFlow protocol disclosed in each of Non-Patent Literatures 2 and 3, for example.

The switches 20A to 20E are connected as shown in solid lines in Fig. 2 to form a physical network.

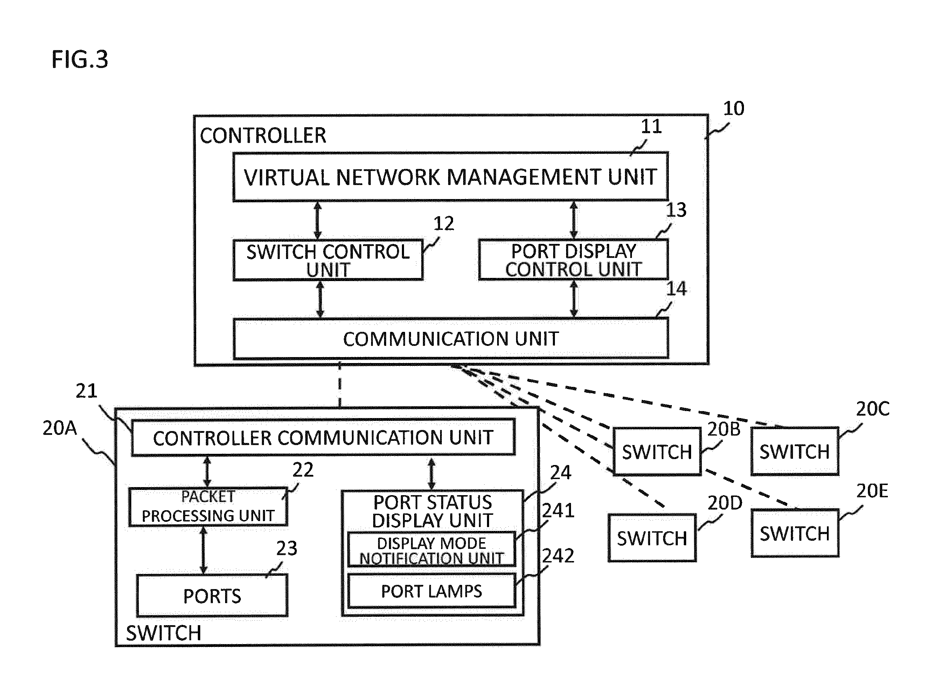

Fig. 3 is a block diagram showing detailed configurations of the controller 10 and the switch 20A. Referring to Fig. 3, the controller 10 includes a virtual network management unit 11 configured to store configuration information on a virtual network, a switch control unit 12 configured to control each of the switches 20A and 20E by referring to the configuration information on the virtual network, a port display control unit 13 configured to give an instruction to a port status display unit 24 of each switch, based on the configuration information on the virtual network, and a communication unit 14 configured to communicate with each of the switches 20A to 20C.

The switch 20A includes a controller communication unit 21 configured to communicate with the controller 10, a packet processing unit 22 configured to process a packet according to control information (such as a flow entry disclosed in each of Non-Patent Literatures 2 and 3) set by the controller, a port 23 configured to input/output the packet, and the port status display unit 24. In the following description, a configuration of each of the switches 20B to 20E is omitted. Each of the switches 20B to 20E, however, may have a similar configuration to the switch 20A. The switch that does not need virtual port status display may have a configuration that omits the port status display unit 24.

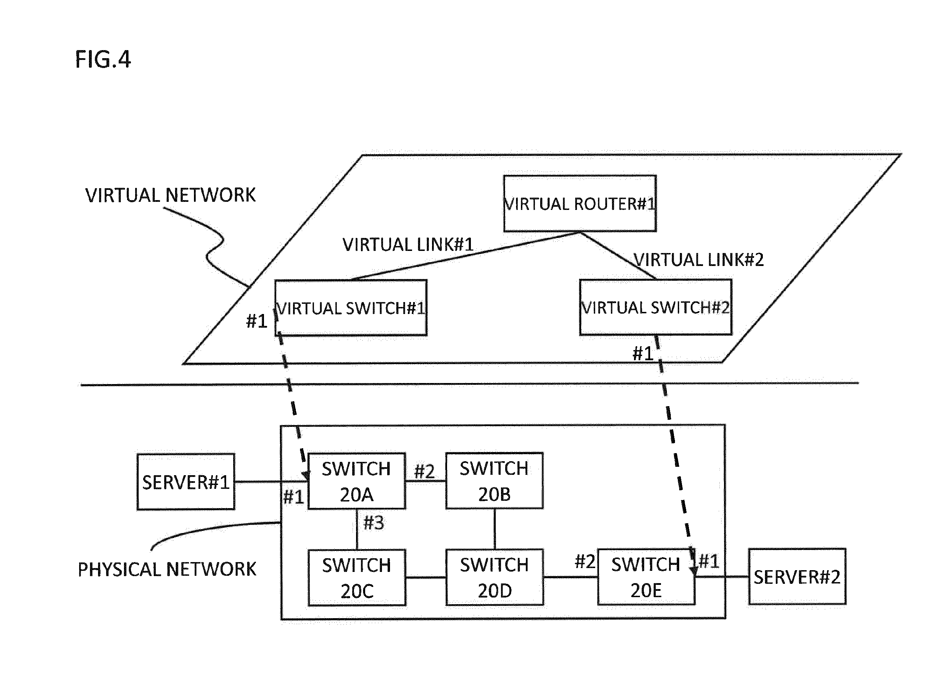

First, each unit of the controller 10 will be described in detail. The virtual network management unit 11 manages the configuration information on the virtual network such as presence or absence of a virtual link between virtual switches, a correspondence relationship between each physical port and each virtual port. Let us consider construction of the virtual network using five physical switches 20A to 20E, as shown in Fig. 4. Numerals in #1 to #3 in Fig. 4 indicate port numbers of the switch 20A, the switch 20E, and virtual switches #1 and #2.

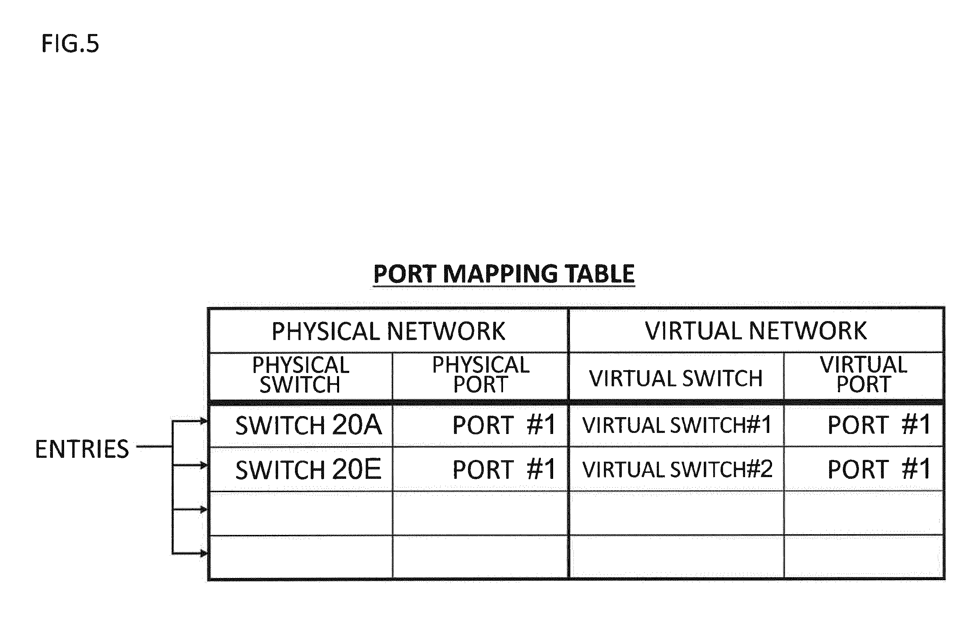

The virtual network management unit 11 manages a correspondence relationship (indicated by a broken line in Fig. 4) between the physical port of the switch 20A on the physical network in Fig. 4 and the virtual port of the virtual switch #1 on the virtual network and a correspondence relationship (indicated by a broken line in Fig. 4) between the physical port of the switch 20E on the physical network in Fig. 4 and the virtual port of the virtual switch #2 on the virtual network. Fig. 5 shows an example of a table (port mapping table) for managing a correspondence relationship between each physical node (switch) and a port of the physical node (switch) and each node (virtual switch) and a port of the node (virtual switch) on the virtual network.

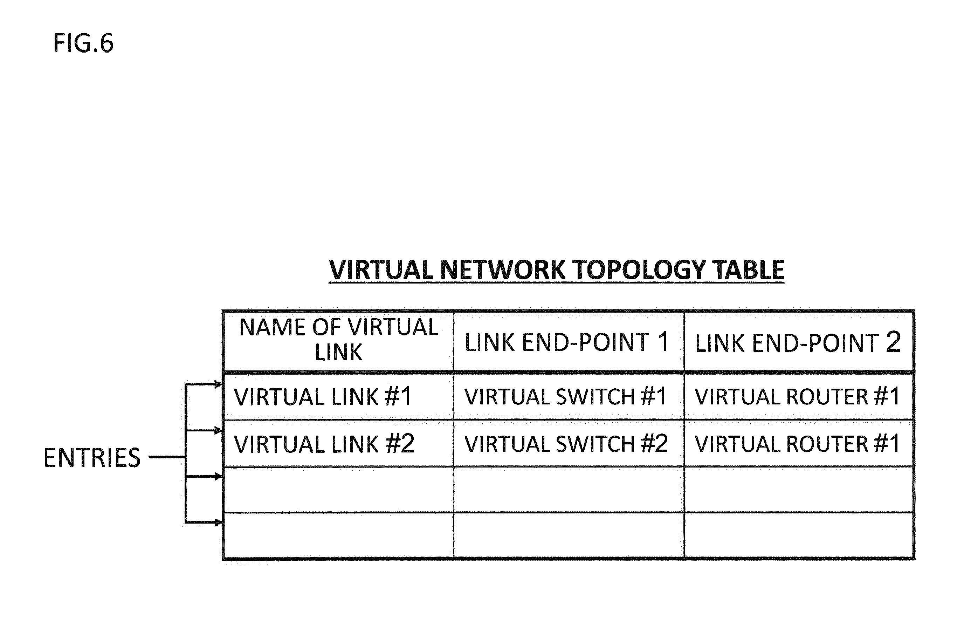

The virtual network management unit 11 manages topology information of the virtual network. Fig. 6 is a table (virtual network topology table) for managing the topology information of the virtual network in Fig. 4.

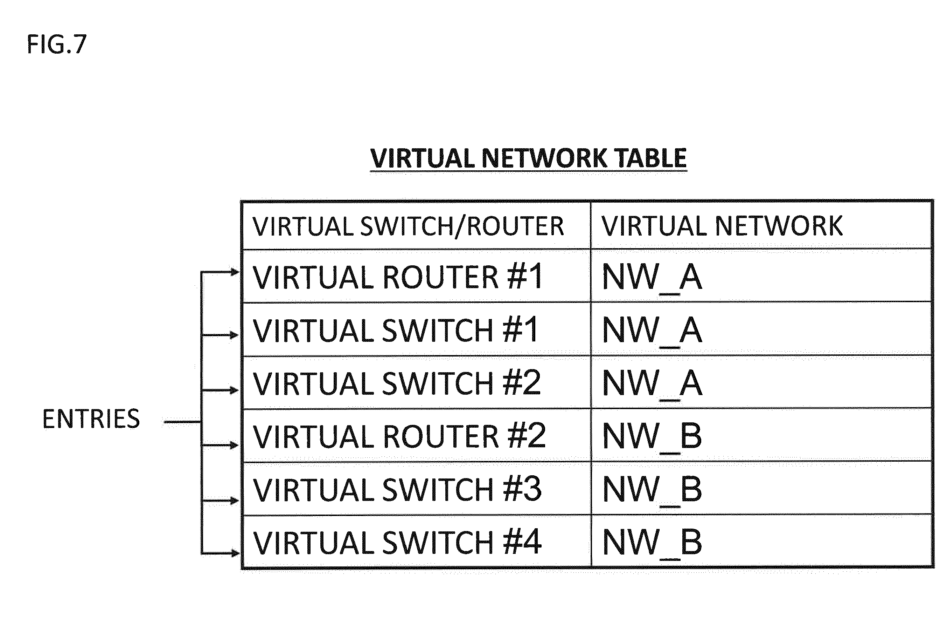

The virtual network management unit 11 manages, for each virtual network, each virtual node of the virtual network. Fig. 7 shows an example of a table (virtual network table) for managing each node on each virtual network. In the example in Fig. 7, information on a virtual network B as well as the virtual network (virtual network A) shown in Fig. 4 is stored.

The switch control unit 12 sets control information (flow entry) in each of the switches 20A to 20E, based on the information on the virtual network managed by the virtual network management unit 11, thereby controlling each of the switches 20A to 20E.

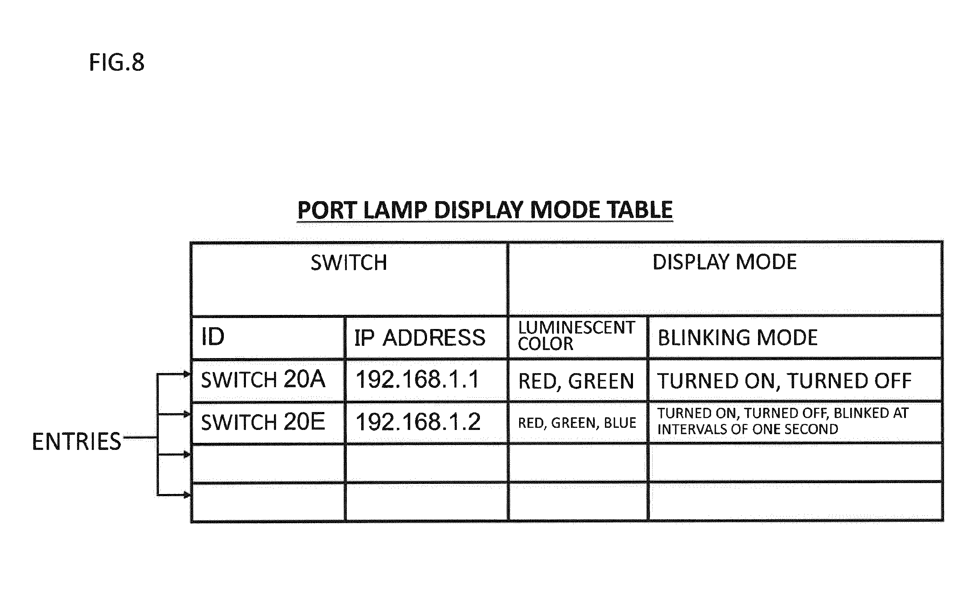

The port display control unit 13 controls port lamps 242 of the switch 20A, according to the status of the virtual network. Fig. 8 is a table (port lamp display mode table) for managing a port lamp display mode of each physical node (switch). In the example of Fig. 8, each switch identified by an IP address can be associated with a luminescent color of a port lamp of the switch or a blinking mode such as a blinking interval, and the association can be stored. Upon receipt of the display mode of a port from each switch via the communication unit 14, the port display control unit 13 adds an entry indicating the display mode of the switch to the port lamp display mode table.

The port display control unit 13 determines how the status of a virtual port of the switch, for which display of the status of each port is to be controlled, is indicated by the port lamp, by referring to a corresponding entry in the port lamp display mode table. Let us consider the switch 20A in the port lamp display mode table in Fig. 7, for example. Each port lamp 242 of the switch 20A can emit light in red or green, and the port lamp 242 can be turned on or off. In this case, the port display control unit 13 sets the following rule. The port lamp of the port associated with the virtual port is turned on in green. Then, the port lamp of the port not associated with the virtual port is turned on in red.

More specifically, the port display control unit 13 of the controller 10 obtains from the virtual network management unit 11 the status of the virtual port associated with each physical port of the switch (which is herein set to the switch 20A) for which display of the status of each port is to be controlled. Then, the port display control unit 13 applies the above-mentioned rule, and instructs the switch 20A to turn on the port lamp of the physical port not associated with any virtual network in red and to turn on the port lamp of the physical port associated with one of the virtual networks in blue.

The port status display unit 24 of the switch 20A is configured by including the port lamps 242 and a display mode notification unit 241 configured to notify to the port display control unit 13 of the controller a display mode capable of being adopted by each port lamp of the switch. Upon receipt of a port light lighting pattern from the controller 10, the port status display unit 24 controls lighting of the port lamps 242 according to the instruction of the controller 10. An existent port lamp provided to display a physical link state or the like may be used for each port lamp 242. Alternatively, a port lamp provided separately in order to display the status of a port with respect to the virtual network may be used.

The above-mentioned controller 10 can be implemented by a configuration by adding to the OpenFlow controller described in each of Non-Patent Literatures 2 and 3 functions corresponding to the virtual network management unit 11 and the port display control unit 13. The above-mentioned switch 20A can be implemented by adding to the OpenFlow switch described in each of Non-Patent Literatures 2 and 3 a function corresponding to the port status display unit 24.

The virtual network management unit 11 and the port display control unit 13 of the above-mentioned controller 10 can also be implemented by a computer program configured to cause a computer installed in the controller 10 to execute each of the above-mentioned processes using hardware of the computer. Similarly, the function of the port status display unit 24 of the switch 20A can also be implemented by a computer program configured to cause a computer installed in the switch 20A to execute each of the above-mentioned processes using hardware of the computer.

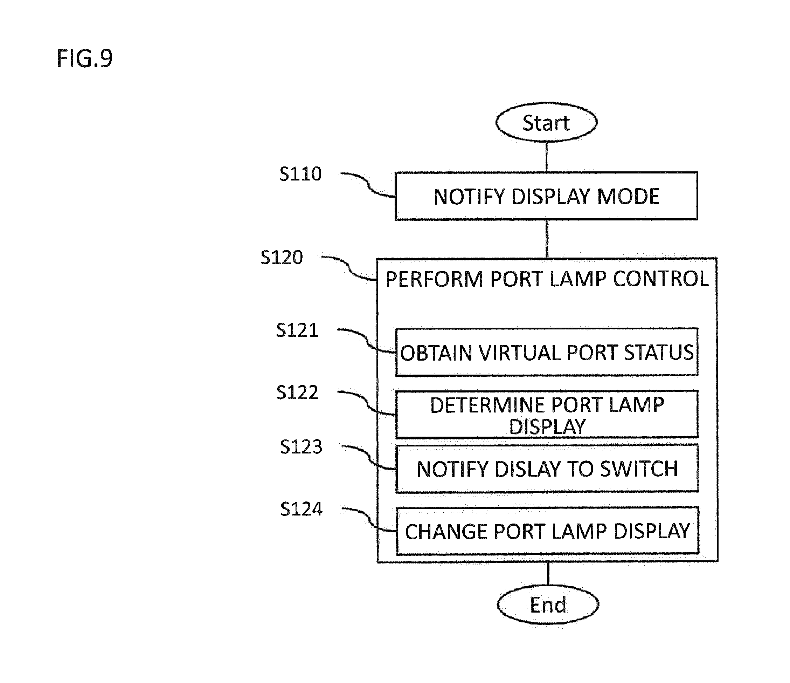

Next, operation of this exemplary embodiment will be described in detail with reference to the drawings. Fig. 9 is a flowchart showing a flow of a display control process of each port lamp of each switch in this exemplary embodiment. In the following description, the description will be given, citing an example of performing display control of each port lamp of the switch 20A.

Referring to Fig. 9, the switch 20A first notifies the display mode of each port lamp to the controller 10 after having connected to the controller 10 (in step S110). Next, upon receipt of the display mode of each port lamp, the controller 10 adds an entry with respect to the switch 20A to the port lamp display mode table.

Next, the controller 10 controls display of each port lamp of the switch 20A (in step S120). After connection of the controller 10 to each of the switches 20A to 20E, the controller 10 executes this step S120 whenever a virtual port status changes.

The above-mentioned step S120 is executed by a procedure constituted from steps S121 to S124. First, the port display control unit 13 of the controller 10 searches for the port mapping table (refer to Fig. 5) to check presence or absence of a virtual port associated with each port of the switch 20A (in step S121).

In the case of the port mapping table in Fig. 5, for example, a physical port #1 of the physical switch 20A is associated with a virtual port #1 of the virtual switch #1. On the other hand, an entry with respect to each of physical ports # 2 and #3 of the physical switch 20A is not present in the mapping table in Fig. 5, so that it can be seen that the physical ports # 2 and #3 are not associated with virtual ports (refer to the configuration of the virtual network in Fig. 4 as well).

Next, the port display control unit 13 of the controller 10 determines display (mode) of each port lamp 242 based on presence or absence of association between the virtual port and each physical port, by referring to the port lamp display mode table shown in Fig. 8 (in step S122). It is assumed herein that the port display control unit 13 determines that the port lamp of the physical port associated with the virtual port is turned on in green and the port lamp of the physical port not associated with the virtual port is turned on in red, as described above.

According to the port mapping table in Fig. 5, the physical port #1 of the physical switch 20A is associated with the virtual port #1 of the virtual switch #1. Thus, the port lamp of the physical port #1 of the physical switch 20A is turned on in green. Further, each of the physical ports #2 and #3 of the physical switch 20A is not associated with any virtual port. Thus, the port lamp of each of the physical ports #2 and #3 of the physical switch 20A is turned on in red.

The controller 10 instructs the lighting pattern of the port lamps determined in step S122 to the switch 20A (in step S123).

The switch 20A performs display control of the port lamps 242, according to the lighting pattern instructed by the controller 10 (in step S124).

As a result, the operator can know whether or not the port is associated with the virtual port just by seeing display of the port lamps 242 of the switch 20A, without referring to the information held by the controller 10 one by one via a management terminal or the like.

According to this exemplary embodiment, work of network maintenance can be reduced, and a cable connection error can be reduced. The reasons for the advantages are as follows. That is, just by seeing the port lamps 242 of the switch 20A, the operator can obtain the information on the virtual network associated with the port. Further, the operator can visually identify the port to be connected. Thus, the cable connection error can be reduced.

The above description was given, citing the example of performing display control of each port lamp of the switch 20A. Display of whether or not each of the other switches is associated with a virtual network port can also be similarly performed.

### [Second Exemplary Embodiment]

Next, a second exemplary embodiment obtained by adding a virtual network selecting (switching) function to the configuration of the first exemplary embodiment will be described with reference to the drawings. Since a basic configuration of the second exemplary embodiment is the same as that of the first exemplary embodiment, description will be given, centering on a difference from the first exemplary embodiment.

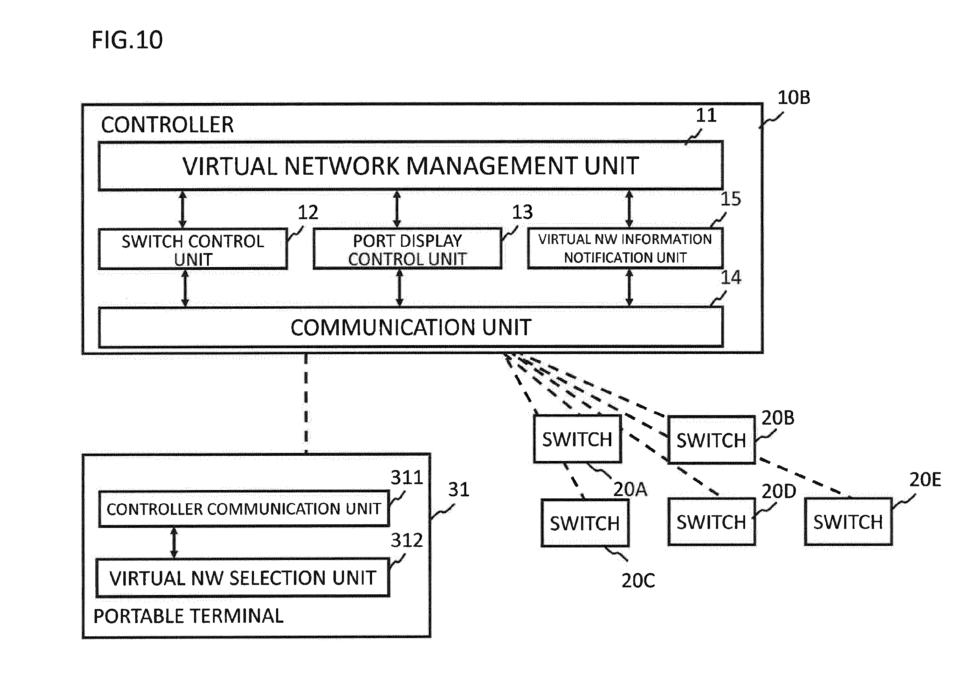

Fig. 10 is a block diagram showing a configuration of a controller, a portable terminal, and switches in the second exemplary embodiment. Referring to Fig. 10, a portable terminal 31 such as a smart phone or a tablet terminal is added to a configuration which is the same as that of the first exemplary embodiment. A virtual network information notification unit 15 is added to a controller 10B.

The virtual network information notification unit 15 of the controller 10B refers to the virtual network table shown in Fig. 7 to transmit a list of virtual networks to the portable terminal 31.

The portable terminal 31 is configured by including a controller communication unit 311 configured to communicate with the controller 10B and a virtual network selection unit (virtual NW selection unit) 312 configured to present the list of virtual networks transmitted from the controller and to receive selection of a virtual network from a user and transmit the selected virtual network to the controller 10B.

Next, operation of this exemplary embodiment will be described. Let us consider a case where an operator connects a certain server to a virtual network "NW_A", for example. First, the virtual network information notification unit 15 of the controller 10B refers to the virtual network table shown in Fig. 7, and transmits the list of virtual networks to the portable terminal 31. In the example in Fig. 7, two virtual networks of "NW_A" and "NW_B" are present.

The virtual NW selection unit 312 of the portable terminal 31 that has received the list of virtual networks presents the list of virtual networks to the operator. Then, when the operator selects the virtual network "NW_A" from the list of virtual networks, the virtual network selection unit 312 of the portable terminal 31 transmits the virtual network "NW_A" selected by the operator.

The controller 10B controls port lamps of a switch 20A, and turns on only the port lamp of a port belonging to the virtual network "NW_A". To take an example, the controller 10B causes the port lamp with a cable inserted thereinto to be turned on in green, and causes the port lamp with a cable not inserted thereinto to blink in red. Then, the other port lamps are turned off. By operating the portable terminal 31 in the vicinity of front surfaces of the switches by the operator, the position of the physical port associated with the virtual port and targeted for the work can be visually identified. Thus, a connection error can be reduced.

As described above, according to this exemplary embodiment, the virtual network to which an apparatus or the like is added can be specified for display on the port lamp of the switch.

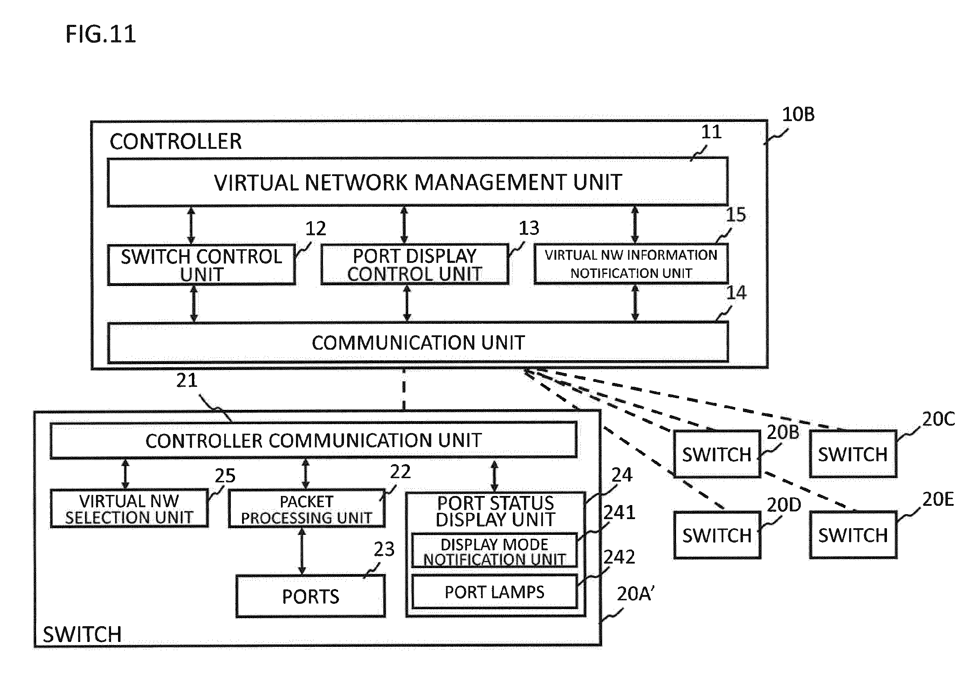

Though the above description was given about the exemplary embodiments of the present invention, the present invention is not limited to the exemplary embodiments described above. Further variation, substitution, and adjustment can be added within the scope not departing from the basic technical concept of the present invention. In the second exemplary embodiment described above, for example, the description was given, assuming that the virtual network was switched by using the portable terminal 31. A configuration (of a third exemplary embodiment) in which a virtual network selection unit 25 is provided on the side of each switch as shown in Fig. 11 can also be adopted.

In each of the exemplary embodiments described above, the description was given, assuming that the port lamp of each switch was used as an apparatus configured to display a port status. Other display apparatuses can also be used. To take an example, a small-sized display (refer to the "port status display apparatus 30" in Fig. 1) may be provided in the vicinity of each port to display disposition, an assignment status, and so forth of the port of the switch. In this case, more information than that in the case of the port lamp, such as the displayed name of the virtual network to which the port belongs, can be informed to the operator.

Finally, preferred modes of the present invention will be summarized.

### [First Mode]

(See the control apparatus according to the first aspect described above).

### [Second Mode]

In the control apparatus according to the first mode,
the virtual network management unit manages a plurality of virtual networks to be provided by one physical network; and
the port status display control unit causes the predetermined port status display apparatus to display an assignment status of the port with respect to one of the virtual networks specified by a user.

### [Third Mode]

In the control apparatus according to the first or second mode,
the port status display control unit instructs the physical node to perform display control of each port lamp provided at the physical node; and
the port lamp provided at the physical node is used as the predetermined port status display apparatus.

### [Fourth Mode]

In the control apparatus according to the third mode,
the control apparatus further includes:
a port lamp display mode table configured to store information on each port lamp included by the physical node; and
the port status display control unit determines a display mode of each port lamp to be instructed to the physical node, by referring to the port lamp display mode table.

### [Fifth Mode]

In the control apparatus according to the first or second mode,
the port status display control unit transmits to a predetermined terminal apparatus the assignment status of each port of the physical node with respect to the virtual network; and
the terminal apparatus is used as the predetermined port status display apparatus.

]

### [Sixth Mode]

(See the physical node according to the second aspect described above).

### [Seventh Mode]

In the physical node according to the sixth mode,
the physical node makes a request to display an assignment status of the port with respect to a virtual network specified from a user to the control apparatus, and displays the assignment status of the port received from the control apparatus, using the port lamp.

### [Eighth Mode]

(See the terminal apparatus according to the third aspect described above).

### [Ninth Mode]

In the terminal apparatus according to the eighth mode,
the terminal apparatus makes a request to display an assignment status of the port with respect to a virtual network specified by a user to the control apparatus, and displays the assignment status of the port received from the control apparatus.

### [Tenth Mode]

(See the communication system according to the fourth aspect described above).

### [Eleventh Mode]

(See the port status display method according to the fifth aspect described above).

### [Twelfth Mode]

(See the program according to the sixth aspect described above).

Each disclosure of the above-listed Patent Literatures and Non-Patent Literatures is incorporated herein by reference. Modification and adjustment of each exemplary embodiment and each example are possible within the scope of the overall disclosure (including the claims) of the present invention and based on the basic technical concept of the present invention. Various combinations and selections of various disclosed elements (including each element in each claim, each element in each exemplary embodiment and each example, each element in each drawing, and the like) are possible within the scope of the claims of the present invention. That is, the present invention naturally includes various variations and modifications that could be made by those skilled in the art according to the overall disclosure including the claims and the technical concept.

### [Reference Signs List]

- 10, 10B: controller
- 10A: control apparatus
- 11: virtual network management unit
- 12: switch control unit
- 13: port display control unit
- 14: communication unit
- 15: virtual network information notification unit (virtual NW information notification unit)
- 20A~20E: switch
- 21: controller communication unit
- 22: packet processing unit
- 23: port
- 24: port status display unit
- 25, 312: virtual network selection unit (virtual NW selection unit)
- 30: port status display apparatus
- 31: portable terminal
- 241: display mode notification unit
- 242: port lamp
- 311: controller communication unit

## Claims

1. A control apparatus, comprising:
a virtual network management unit configured to manage a virtual network using mapping information that associates configuration information on a physical network and configuration information on the virtual network;
a control unit configured to set control information in a physical node on the physical network, based on the mapping information, thereby causing the physical node to operate as a virtual node on the virtual network; and
a port status display control unit configured to determine an assignment status of a port(s) of the physical node with respect to the virtual network, based on the mapping information, and to cause a predetermined port status display apparatus to display the assignment status of the port(s) with respect to the virtual network.

2. The control apparatus according to claim 1, wherein
the virtual network management unit manages a plurality of virtual networks to be provided by one physical network; and
the port status display control unit causes the predetermined port status display apparatus to display an assignment status of a port with respect to one of the virtual networks specified by a user.

3. The control apparatus according to claim 1 or 2, wherein
the port status display control unit instructs the physical node to perform display control of a port lamp provided at the physical node; and
the port status display control unit uses the port lamp provided at the physical node as the predetermined port status display apparatus.

4. The control apparatus according to claim 3, wherein the control apparatus further comprises:
a port lamp display mode table configured to store information on a port lamp included by the physical node; and
the port status display control unit determines a display mode of a port lamp to be instructed to the physical node, by referring to the port lamp display mode table.

5. The control apparatus according to claim 1 or 2, wherein
the port status display control unit transmits to a predetermined terminal apparatus the assignment status of a port of the physical node with respect to the virtual network; and
the port status display control unit uses the terminal apparatus as the predetermined port status display apparatus.

6. A physical node, comprising:
a plurality of ports and a port lamp for displaying a status of each port;
a packet processing unit configured to forward a packet received from each port, based on control information set by a control apparatus; and
a port lamp control unit configured to perform display control of the port lamp such that an assignment status of each port with respect to a virtual network is displayed, based on an instruction from the control apparatus.

7. The physical node according to claim 6, wherein
the physical node makes a request to display an assignment status of the port with respect to a virtual network specified from a user to the control apparatus, and displays the assignment status of the port received from the control apparatus, using the port lamp.

8. A terminal apparatus configured to request an assignment status of a port of an arbitrary physical node with respect to a virtual network to the control apparatus as set forth in claim 5, and to display the assignment status of the port of the physical node with respect to the virtual network received from the control apparatus.

9. The terminal apparatus according to claim 8, wherein
the terminal apparatus makes a request to display an assignment status of the port with respect to a virtual network specified by a user to the control apparatus, and displays the assignment status of the port received from the control apparatus.

10. A port status display method to be executed by a control apparatus comprising a virtual network management unit configured to manage a virtual network using mapping information that associates configuration information on a physical network and configuration information on the virtual network and a control unit configured to set control information in a physical node on the physical network, based on the mapping information, thereby causing the physical node to operate as a virtual node on the virtual network, the port status display method comprising the steps of:
determining an assignment status of a port of the physical node with respect to the virtual network, based on the mapping information; and
causing a predetermined port status display apparatus to display the assignment status of the port with respect to the virtual network.
